# EUROPEAN PATENT APPLICATION

(11) **EP 4 796 575 A1**
(43) Date of publication of application: **26.08.2026**
(21) Application number: 24880076.5
(22) Date of filing: 15.10.2024
(51) Int. Cl.: C08G 73/10, C08J 5/18

(54) **POLYIMIDE HAVING SOLUBILITY, AND PREPARATION METHOD THEREFOR**

(30) Priority: 17.10.2023 KR 20230138501
(71) Applicant: PI Advanced Materials Co., Ltd., Chungcheongbuk-do 27818 (KR)
(72) Inventor: HWANG, Jeong Jae, Jincheon-gun, Chungcheongbuk-do 27818 (KR); LEE, Kyu Won, Jincheon-gun, Chungcheongbuk-do 27818 (KR); RYU, Han Tae, Jincheon-gun, Chungcheongbuk-do 27818 (KR); LEE, Kil Nam, Jincheon-gun, Chungcheongbuk-do 27818 (KR)
(74) Representative: Calysta NV
(86) International application number: PCT/KR2024/015569
(87) International publication number: WO 2025/084739

(57) **Abstract**

The present disclosure provides a polyimide having solubility in an organic solvent and comprising, as polymerized units, a dianhydride monomer comprising bisphenol A dianhydride (BPADA), and a diamine monomer comprising 2, 2-bis(3-amino-4-hydroxyphenyl)hexafluoropropane (6-FAP).

## Description

### [Technical Field]

The present disclosure relates to a polyimide having soluble characteristics and a method for preparing the same. More specifically, it relates to a polyimide having excellent thermal properties and at the same time having soluble characteristics in organic solvents, and a method for preparing the same.

### [Background Art]

In general, polyimide (PI) is a polymer material having the highest level of heat resistance, chemical resistance, electrical insulation, and weatherability among organic materials, based on an imide ring having excellent chemical stability along with a rigid aromatic backbone, and can be manufactured into various forms such as a film, a fiber, and a membrane. Due to these characteristics, polyimide is used in a wide range of fields as an advanced material and insulating coating material in the fields of electrical and electronics, semiconductors, displays, automobiles, aviation, and aerospace materials.

Polyimide can be prepared by dissolving an acid dianhydride having two acid anhydride groups in a molecule and a diamine having two amino groups in a molecule in a solvent, synthesizing a polyimide precursor called polyamic acid (PAA), applying and drying the same, and then imidizing it by heat treatment at a temperature of about 350°C. Conventionally, since there has been a high demand for handling polyimide in a solution state, much development has been made on solvent-soluble polyimide.

However, polyimide prepared by imidization through a dehydration and ring-closing reaction using a conventional chemical method or high-temperature method has a problem in that it is difficult to process due to its insoluble characteristics in solvents. In addition, in order to prepare a solvent-soluble polyimide, highly soluble monomers are generally inevitably used. Since these monomers generally have low heat resistance, there is a problem in that the prepared polyimide has low heat resistance and chemical resistance. Meanwhile, in order to use polyimide in the form of a solution while having heat resistance and chemical resistance, there is a method of preparing polyimide by forming a coating film with a polyamic acid solution, which is a polyimide precursor, and then imidizing the same.

However, the polyamic acid solution is easily affected by humidity, is difficult to handle or store, and has a disadvantage in that it has to undergo a heat treatment process at a high temperature to imidize the polyamic acid.

Under such a background, there is a need to develop a polyimide that is easily dissolved in an organic solvent while maintaining the high heat resistance and insulation properties of polyimide, and is capable of manufacturing polyimide-based products only by solvent drying without an imidization process at a high temperature.

### [Disclosure]

### [Technical Problem]

An object of the present disclosure is to provide a polyimide (PI) having soluble characteristics in an organic solvent and also having excellent thermal and mechanical properties.

Another object of the present disclosure is to provide a polyimide that is fully imidized and can be variously manufactured into films, fibers, etc. only by drying a solvent without an imidization process at a high temperature.

In addition, an object of the present disclosure is to provide a polyimide solution including the polyimide.

In addition, an object of the present disclosure is to provide a polyimide powder including the polyimide.

In addition, an object of the present disclosure is to provide a polyimide film including the polyimide.

In addition, an object of the present disclosure is to provide the polyimide in various forms such as a separator, a binder, an insulating coating, and a coating material including the polyimide.

In addition, an object of the present disclosure is to provide a method for preparing the polyimide.

### [Technical Solution]

Since the present disclosure can be modified in various ways and have various embodiments, specific embodiments will be illustrated and described in detail. However, this is not intended to limit the present disclosure to specific embodiments, and it should be understood to include all modifications, equivalents, and substitutes included in the spirit and scope of the present disclosure.

The terms used in the present disclosure are merely used to describe specific embodiments and are not intended to limit the present disclosure. Singular expressions include plural expressions unless the context clearly dictates otherwise. In the present disclosure, terms such as "comprise" or "have" are intended to designate the presence of features, numbers, steps, operations, components, parts, or combinations thereof described in the specification, but it should be understood that they do not preclude the possibility of the presence or addition of one or more other features, numbers, steps, operations, components, parts, or combinations thereof.

In the present specification, when an amount, concentration, or other value or parameter is given as a range, a preferred range, or an enumeration of preferred upper and preferred lower limit values, it should be understood as specifically disclosing all ranges formed by any pair of any upper range limit or preferred value and any lower range limit or preferred value, regardless of whether the range is separately disclosed.

When a range of numerical values is mentioned herein, unless otherwise stated, the range is intended to include its endpoints and the scope of the present disclosure is not intended to be limited to the specific values mentioned when defining the range.

As used herein, "dianhydride" is intended to include precursors or derivatives thereof, which may also be referred to as "dianhydride acid," "dianhydride," or "acid dianhydride." These may not technically be dianhydrides, but will nevertheless react with a diamine to form a polyamic acid, which in turn can be converted to a polyimide.

As used herein, "diamine" is intended to include precursors or derivatives thereof, which may not technically be diamines, but will nevertheless react with a dianhydride acid to form a polyamic acid, which in turn can be converted to a polyimide.

Unless otherwise defined, all terms used herein, including technical or scientific terms, have the same meaning as commonly understood by a person having ordinary skill in the art to which the present disclosure pertains. Terms such as those defined in commonly used dictionaries should be interpreted as having a meaning consistent with the meaning in the context of the related art, and are not to be interpreted in an ideal or excessively formal meaning unless explicitly defined in the present application. Detailed descriptions for the implementation of the disclosure are described below.

The present disclosure relates to a polyimide having soluble characteristics and a method for preparing the same.

### Polyimide

The present disclosure provides a polyimide comprising, as polymerized units, a dianhydride acid monomer comprising bisphenol A dianhydride (BPADA); and a diamine monomer comprising 2,2-bis(3-amino-4-hydroxyphenyl)hexafluoropropane (6-FAP); and having soluble characteristics in an organic solvent.

The polyimide may comprise polymerized units consisting of the bisphenol A dianhydride (BPADA) and the 2,2-bis(3-amino-4-hydroxyphenyl)hexafluoropropane (6-FAP).

The polyimide may exhibit soluble characteristics in an organic solvent for a solid content of 15 wt% or more. Specifically, the polyimide has excellent solubility in an organic solvent for 15 wt%, 16 wt%, 17 wt%, 18 wt%, 19 wt%, 20 wt%, 21 wt%, 22 wt%, 23 wt%, 24 wt%, or 25 wt% or more, and according to one embodiment, after adding 20 wt% of a polyimide solid content at room temperature and stirring for 30 minutes, a turbidity of the solution was visually confirmed.

The organic solvent may comprise at least one selected from the group consisting of N,N'-dimethylformamide (DMF), N-methyl-pyrrolidone (NMP), N,N'-diethylformamide (DEF), N,N'-dimethylacetamide (DMAc), dimethylpropanamide (DMPA), N,N-diethylacetamide (DEAc), dimethyl sulfoxide (DMSO), 3-methoxy-N,N-dimethylpropanamide (KJCMPA), p-chlorophenol, o-chlorophenol, gamma-butyrolactone (GBL), diglyme, and naphthalene, preferably at least one selected from the group consisting of N,N'-dimethylformamide (DMF), N-methyl-pyrrolidone (NMP), and N,N'-dimethylacetamide (DMAc), and more preferably N,N'-dimethylformamide (DMF).

A content of the bisphenol A dianhydride (BPADA) may be 50 to 100 mol% based on the total dianhydride acid monomers, preferably 50 to 90 mol%, 50 to 80 mol%, 50 to 70 mol%, 50 to 60 mol%, and more preferably 50 to 55 mol%. If the content of the bisphenol A dianhydride (BPADA) is less than 50 mol%, it is not preferable because the soluble characteristics and thermal properties of the polyimide are not realized.

A content of the 2,2-bis(3-amino-4-hydroxyphenyl)hexafluoropropane (6-FAP) may be 30 to 100 mol% based on the total diamine monomers, preferably 30 to 90 mol%, 30 to 80 mol%, 30 to 70 mol%, 30 to 60 mol%, 30 to 50 mol%, and more preferably 30 to 40 mol%. If the content of the 2,2-bis(3-amino-4-hydroxyphenyl)hexafluoropropane (6-FAP) is less than 30 mol%, it is not preferable because the soluble characteristics and thermal properties of the polyimide are not realized.

The dianhydride acid monomer may further comprise at least one selected from the group consisting of 3,3',4,4'-benzophenonetetracarboxylic dianhydride (BTDA), pyromellitic dianhydride (PMDA), biphenyl tetracarboxylic dianhydride (BPDA), oxydiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, bis(3,4-dicarboxyphenyl)methane dianhydride, 2,2-bis(3,4-dicarboxyphenyl)propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic dianhydride, 1,4,5,8-naphthalenetetracarboxylic dianhydride, and 4,4'-(2,2-hexafluoroisopropylidene)diphthalic dianhydride, and preferably may further comprise 3,3',4,4'-benzophenonetetracarboxylic dianhydride (BTDA).

The diamine monomer may further comprise at least one selected from the group consisting of m-phenylenediamine (MPD), 4,4'-diaminodiphenylmethane (MDA), 4,4'-diaminodiphenyl ether (ODA), 2,2-bisaminophenoxyphenylpropane (BAPP), metaphenylenediamine, 3,3'-dimethylbenzidine, 2,2'-dimethylbenzidine, 2,4-diaminotoluene, 2,6-diaminotoluene, 3,5-diaminobenzoic acid (DABA), 3,3'-dimethyl-4,4'-diaminobiphenyl, 2,2'-dimethyl-4,4'-diaminobiphenyl (m-tolidine), 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, 4,4'-diaminobenzanilide, 3,3'-dimethoxybenzidine, 2,2'-dimethoxybenzidine, 3,3'-diaminodiphenyl ether, 3,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenyl)phenoxybenzophenone, 3,3'-diamino-4,4'-di(4-phenylphenoxy)benzophenone, 1,3-bis(3-aminophenyl sulfide)benzene, 1,3-bis(4-aminophenyl sulfide)benzene, 1,4-bis(4-aminophenyl sulfide)benzene, 1,3-bis(3-aminophenyl sulfone)benzene, 1,3-bis(4-aminophenyl sulfone)benzene, 1,4-bis(4-aminophenyl sulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl] ether, bis[3-(4-aminophenoxy)phenyl] ether, bis[4-(3-aminophenoxy)phenyl] ether, bis[4-(4-aminophenoxy)phenyl] ether, bis[3-(3-aminophenoxy)phenyl] ketone, bis[3-(4-aminophenoxy)phenyl] ketone, bis[4-(3-aminophenoxy)phenyl] ketone, bis[4-(4-aminophenoxy)phenyl] ketone, bis[3-(3-aminophenoxy)phenyl] sulfide, bis[3-(4-aminophenoxy)phenyl] sulfide, bis[4-(3-aminophenoxy)phenyl] sulfide, bis[4-(4-aminophenoxy)phenyl] sulfide, bis[3-(3-aminophenoxy)phenyl] sulfone, bis[3-(4-aminophenoxy)phenyl] sulfone, bis[4-(3-aminophenoxy)phenyl] sulfone, bis[4-(4-aminophenoxy)phenyl] sulfone, bis[3-(3-aminophenoxy)phenyl] methane, bis[3-(4-aminophenoxy)phenyl] methane, bis[4-(3-aminophenoxy)phenyl] methane, bis[4-(4-aminophenoxy)phenyl] methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane, and preferably may further comprise at least one selected from the group consisting of m-phenylenediamine (MPD) and 4,4'-diaminodiphenylmethane (MDA).

According to one embodiment, the polyimide may comprise, as polymerized units, dianhydride acid monomers bisphenol A dianhydride (BPADA) and 3,3',4,4'-benzophenonetetracarboxylic dianhydride (BTDA); and diamine monomers 2,2-bis(3-amino-4-hydroxyphenyl)hexafluoropropane (6-FAP) and m-phenylenediamine (MPD).

According to one embodiment, the polyimide may comprise, as polymerized units, dianhydride acid monomers bisphenol A dianhydride (BPADA) and 3,3',4,4'-benzophenonetetracarboxylic dianhydride (BTDA); and diamine monomers 2,2-bis(3-amino-4-hydroxyphenyl)hexafluoropropane (6-FAP) and 4,4'-diaminodiphenylmethane (MDA).

According to one embodiment, the polyimide may comprise, as polymerized units, dianhydride acid monomers bisphenol A dianhydride (BPADA) and 3,3',4,4'-benzophenonetetracarboxylic dianhydride (BTDA); and diamine monomers 2,2-bis(3-amino-4-hydroxyphenyl)hexafluoropropane (6-FAP), m-phenylenediamine (MPD), and 4,4'-diaminodiphenylmethane (MDA).

The polyimide may comprise 90 to 110 mol% of the diamine monomer, preferably 95 to 105 mol%, and more preferably 100 mol%.

The polyimide may comprise 90 to 110 mol% of the dianhydride acid monomer, preferably 95 to 105 mol%, and more preferably 100 mol%.

The polyimide may comprise the dianhydride acid monomer and the diamine monomer at a molar ratio of 1:2 to 2:1, and preferably at a molar ratio of 1:1.

In the present disclosure, the thermal decomposition temperature (Td), which is mainly used as a standard for determining the thermal properties of the polyimide, was confirmed.

The 5 wt% thermal decomposition temperature (Td) of the polyimide may be 385°C or higher, and for example, the lower limit of the thermal decomposition temperature may be 387±1°C, 390±1°C, 393±1°C, 395±1°C, 397±1°C, 400±1°C, 403±1°C, 405±1°C, 407±1°C, or 410±1°C or higher. The upper limit of the thermal decomposition temperature is not particularly limited, but may be 600°C or lower, 590°C or lower, or 580°C or lower.

The thermal decomposition temperature can be measured using a TA Instruments thermogravimetric analysis Q50 model. In a specific embodiment, the polyimide is heated to 100°C at a rate of 10°C/min under a nitrogen atmosphere and then maintained isothermal for 1 hour to remove moisture. Thereafter, the temperature is raised to 600°C at a rate of 10°C/min to measure the temperature at which a 5% weight loss occurs.

The polyimide of the present disclosure is characterized by having excellent solubility in an organic solvent while maintaining excellent thermal properties.

In another aspect, a polyimide solution comprising the polyimide of the present disclosure and an organic solvent is provided.

Since the polyimide of the present disclosure has excellent solubility in an organic solvent, there is an advantage that it can be easily used for a polyimide film, a fiber, or a coating by being used in the form of a solution dissolved in an organic solvent.

In the present disclosure, the polyimide solution may have a polyimide solid content of 15 to 50 wt% based on 100 parts by weight of the polyimide solution. The lower limit of the weight% of the solid content may be 16, 17, 18, 19, or 20 wt% or more, and the upper limit of the weight% of the solid content may be 45, 40, 35, 30, 27, or 25 wt% or less. By controlling the solid content of the polyimide solution, an increase in viscosity can be controlled and the process time can be shortened during a curing process.

In addition, in another aspect, a polyimide powder comprising the polyimide of the present disclosure is provided.

In addition, in another aspect, a polyimide film comprising the polyimide of the present disclosure is provided.

The thickness of the polyimide film may be appropriately selected in consideration of the purpose, use environment, physical properties, etc. of the polyimide film. For example, the thickness of the polyimide film may be 1 to 100 µm, 5 to 50 µm, 10 to 40 µm, or 15 to 25 µm, but is not limited thereto.

In addition, in another aspect, a part comprising a molded article formed from the polyimide is provided.

Specifically, the part may be an electronic circuit board member, a semiconductor device, a lithium ion battery member, a solar cell member, a fuel cell member, a motor winding, an engine peripheral member, a paint, an optical component, a heat dissipation material, an electromagnetic wave shielding material, a surge component, a dental material, a slide coating, and an electrostatic chuck, but is not limited thereto.

In addition, the present disclosure provides a separator comprising the polyimide according to the above description.

In addition, the present disclosure provides a fiber comprising the polyimide according to the above description.

In addition, the present disclosure provides an insulating layer comprising the polyimide according to the above description.

In addition, the present disclosure provides a coating layer comprising the polyimide according to the above description.

### Method for preparing polyimide

The present disclosure provides a method for preparing a polyimide,comprising: preparing a polyimide by polymerizing a dianhydride acid monomer comprising bisphenol A dianhydride (BPADA) and a diamine monomer including 2,2-bis(3-amino-4-hydroxyphenyl)hexafluoropropane (6-FAP).

The step of preparing the polyimide may comprise forming a polymerized unit consisting of the bisphenol A dianhydride (BPADA) and the 2,2-bis(3-amino-4-hydroxyphenyl)hexafluoropropane (6-FAP) by polymerizing bisphenol A dianhydride (BPADA) and 2,2-bis(3-amino-4-hydroxyphenyl)hexafluoropropane (6-FAP).

The polyimide may be prepared in the presence of a solvent.

The solvent may be an aprotic polar organic solvent, and may comprise at least one selected from the group consisting of N,N'-dimethylacetamide (DMAc), N-methyl-2-pyrrolidone (NMP), N,N'-dimethylformamide (DMF), dimethyl sulfoxide (DMSO), diethylacetamide (DEAc), N-ethyl-2-pyrrolidone (NEP), N,N'-diethylformamide (DEF), dimethylpropanamide (DMPA), and gamma-butyrolactone (GBL), and preferably N,N'-dimethylformamide (DMF) can be used.

In addition, in another aspect, a polyimide powder comprising the polyimide prepared by the method for preparing the polyimide of the present disclosure is provided.

In addition, in another aspect, a polyimide film comprising the polyimide prepared by the method for preparing the polyimide of the present disclosure is provided.

The thickness of the polyimide film may be appropriately selected in consideration of the purpose, use environment, physical properties, etc. of the polyimide film. For example, the thickness of the polyimide film may be 1 to 100 µm, 5 to 50 µm, 10 to 40 µm, or 15 to 25 µm, but is not limited thereto.

In addition, in another aspect, a part comprising a molded article formed from the polyimide prepared by the method for preparing the polyimide is provided.

Specifically, the part may be an electronic circuit board member, a semiconductor device, a lithium ion battery member, a solar cell member, a fuel cell member, a motor winding, an engine peripheral member, a paint, an optical component, a heat dissipation material, an electromagnetic wave shielding material, a surge component, a dental material, a slide coating, and an electrostatic chuck, but is not limited thereto.

In addition, the present disclosure provides a separator comprising the polyimide prepared by the method for preparing the polyimide according to the above description.

In addition, the present disclosure provides a fiber comprising the polyimide prepared by the method for preparing the polyimide according to the above description.

In addition, the present disclosure provides an insulating layer comprising the polyimide prepared by the method for preparing the polyimide according to the above description.

In addition, the present disclosure provides a coating layer comprising the polyimide prepared by the method for preparing the polyimide according to the above description.

### [Advantageous Effects]

The polyimide according to the present disclosure has excellent soluble characteristics in organic solvents, and at the same time has an effect of excellent thermal properties.

The polyimide according to the present disclosure is fully imidized and can be variously manufactured into films, fibers, etc. only by drying the solvent without an imidization process at a high temperature, thereby having an effect of improving the ease of the process.

In addition, the polyimide according to the present disclosure has an effect that can be applied to various fields such as a membrane, a binder, an insulating coating, a coating material, and a fiber.

### [Best Mode]

Examples are provided to help the understanding of the present disclosure. The following examples are provided only for an easier understanding of the present disclosure, and the content of the present disclosure is not limited by the examples.

### <Examples>

### Example 1. Preparation of polyimide

### Example 1-1.

50 mol% of bisphenol A dianhydride (BPADA) and 40 mol% of 2,2-bis(3-amino-4-hydroxyphenyl)hexafluoropropane (6-FAP) were added to a dimethylformamide (DMF) organic solvent in a nitrogen/room temperature atmosphere to form a polymerized unit consisting of BPADA and 6-FAP. Thereafter, 50 mol% of 3,3',4,4'-benzophenonetetracarboxylic dianhydride (BTDA) and 60 mol% of m-phenylenediamine (MPD) were added and polymerized to obtain a polyamic acid composition.

A tertiary catalyst (BP, beta-picoline) and a dehydrating agent (acetic anhydride, AA) were added to the obtained polyamic acid composition, and a chemical imidization process was performed in a continuous process of a polymerization batch at 60°C. Next, after the completion of the reaction, the polymer was precipitated in an ethanol non-solvent to remove impurities (unreacted materials, tertiary catalyst, AA, etc.), and this was dried in a vacuum oven at a temperature of less than 60°C for 24 hours to prepare a polyimide powder (solid content 20 wt%).

### Examples 1-2 to 1-5.

Polyimide films were prepared in the same manner as in Example 1-1, except that the content ratio of the dianhydride acid monomer and the type and content ratio of the diamine monomer were adjusted as shown in Table 1 below.

### Comparative Examples 1-1 to 1-5.

Polyimide films were prepared in the same manner as in Example 1-1, except that the content ratio of the dianhydride acid monomer and the type and content ratio of the diamine monomer were adjusted as shown in Table 1 below.

Table 1 below summarizes the composition and contents of the dianhydride acid monomers and diamine monomers used when preparing the polyimide films according to Examples 1-1 to 1-5 and Comparative Examples 1-1 to 1-5, and the presence or absence of including the step of forming a polymerized unit consisting of BPADA and 6-FAP.

**[Table 1]**

| Classification | Dianhydride acid monomer | | Diamine monomer | | | Presence or absence of including the step of forming a polymerized unit consisting of BPADA and 6-FAP |
|---|---|---|---|---|---|---|
| | BTDA | BPADA | 6-FAP | MPD | MDA | |
| Example 1-1 | 50 | 50 | 40 | 60 | - | ○ |
| Example 1-2 | 50 | 50 | 30 | 70 | - | ○ |
| Example 1-3 | 50 | 50 | 30 | 60 | 10 | ○ |
| Example 1-4 | 50 | 50 | 40 | - | 60 | ○ |
| Example 1-5 | 50 | 50 | 30 | 35 | 35 | ○ |
| Comparative Example 1-1 | 50 | 50 | 20 | 80 | - | ○ |
| Comparative Example 1-2 | 60 | 40 | 30 | 70 | - | ○ |
| Comparative Example 1-3 | 70 | 30 | 30 | 70 | - | ○ |
| Comparative Example 1-4 | 60 | 40 | 30 | 30 | 40 | ○ |
| Comparative Example 1-5 | 60 | 40 | 30 | - | 70 | ○ |

Abbreviations of the materials used in Table 1 are as follows.
BTDA: 3,3',4,4'-benzophenonetetracarboxylic dianhydride
BPADA: bisphenol A dianhydride
6-FAP: 2,2-bis(3-amino-4-hydroxyphenyl)hexafluoropropane
MPD: m-phenylenediamine
MDA: 4,4'-diaminodiphenylmethane

### Example 2. Preparation of polyimide film

### Example 2-1.

The polyimide powder prepared according to Example 1-1 was dissolved in an organic solvent (DMF) to obtain a solution having a solid content of 20 wt%, and the solution thus obtained was coated on a glass substrate to a thickness of 20 µm using a spin coater (MS-B200, Mikasa) and dried at 250°C for 20 minutes. At this time, the coating method is not particularly limited. Subsequently, after cooling at 25°C, it was separated from the glass substrate to prepare a polyimide film having a thickness of about 20 µm.

### Examples 2-2 to 2-5.

Polyimide films were prepared in the same manner as in Example 2-1, except that the polyimide powders prepared according to Examples 1-2 to 1-5, respectively, were used instead of using the polyimide powder prepared according to Example 1-1 in Example 2-1.

### Comparative Examples 2-1 to 2-5.

Polyimide films were prepared in the same manner as in Example 2-1, except that the polyimide powders prepared according to Comparative Examples 1-1 to 1-5, respectively, were used instead of using the polyimide powder prepared according to Example 1-1 in Example 2-1.

### <Experimental Examples>

### Experimental Example 1. Evaluation of solubility

The evaluation of the solubility of the polyimide in an organic solvent was visually confirmed by adding 20 g of the polyimide powder prepared according to Examples 1-1 to 1-5 and Comparative Examples 1-1 to 1-5 to 80 g of an organic solvent N,N'-dimethylformamide (DMF). Specifically, after adding 20 wt% of the polyimide solid content at room temperature and stirring for 30 minutes, the degree of turbidity of the solution was visually confirmed. The results are shown in Table 2 below.

**[Table 2]**

| Classification | Solubility in DMF |
|---|---|
| Example 1-1 | ○ |
| Example 1-2 | ○ |
| Example 1-3 | ○ |
| Example 1-4 | ○ |
| Example 1-5 | ○ |
| Comparative Example 1-1 | X |
| Comparative Example 1-2 | X |
| Comparative Example 1-3 | X |
| Comparative Example 1-4 | X |
| Comparative Example 1-5 | X |

According to Table 2, it can be seen that Examples 1-1 to 1-5 including at least 50 mol% of BPADA and at least 30 mol% of 6-FAP under the same manufacturing conditions have excellent solubility in DMF compared to those having less than 30 mol% of 6-FAP (Comparative Example 1-1) or those having less than 50 mol% of BPADA (Comparative Examples 1-2 to 1-5).

### Experimental Example 2: Evaluation of 5 wt% thermal decomposition temperature (Td)

A TA Instruments thermogravimetric analysis Q50 model was used, and the polyimide films prepared according to Examples 2-1 to 2-5 and Comparative Examples 2-1 to 2-5 were heated up to 100°C at a rate of 10°C/min under a nitrogen atmosphere, and then maintained isothermal for 1 hour to remove moisture. Thereafter, the temperature was raised up to 600°C at a rate of 10°C/min to measure a temperature at which a 5% weight loss occurred, and the results are shown in Table 3 below.

**[Table 3]**

| Classification | Td (5wt%) |
|---|---|
| Example 2-1 | 391°C |
| Example 2-2 | 410°C |
| Example 2-3 | 415°C |
| Example 2-4 | 414°C |
| Example 2-5 | 439°C |
| Comparative Example 2-1 | X |
| Comparative Example 2-2 | X |
| Comparative Example 2-3 | X |
| Comparative Example 2-4 | X |
| Comparative Example 2-5 | X |

According to Table 3, it can be seen that Examples 2-1 to 2-5 including at least 50 mol% of BPADA and at least 30 mol% of 6-FAP under the same manufacturing conditions have excellent thermal properties compared to those having less than 30 mol% of 6-FAP (Comparative Example 2-1) or those having less than 50 mol% of BPADA (Comparative Examples 2-2 to 2-5).

In the specification, detailed descriptions of contents that can be fully recognized and inferred by those having ordinary skill in the art to which the present disclosure pertains have been omitted, and in addition to the specific examples described in the present specification, more various modifications are possible within a range that does not change the technical spirit or essential configuration of the present disclosure. Therefore, the present disclosure can be practiced in a manner different from those specifically described and illustrated herein, which can be understood by those having ordinary skill in the art to which the present disclosure pertains.

## Claims

1. A polyimide comprising, as polymerized units: a dianhydride acid monomer comprising bisphenol A dianhydride (BPADA); and
a diamine monomer comprising 2,2-bis(3-amino-4-hydroxyphenyl)hexafluoropropane (6-FAP), and having soluble characteristics in an organic solvent.

2. The polyimide of claim 1,
wherein the polyimide comprises a polymerized unit consisting of the bisphenol A dianhydride (BPADA) and the 2,2-bis(3-amino-4-hydroxyphenyl)hexafluoropropane (6-FAP).

3. The polyimide of claim 1,
wherein the polyimide exhibits soluble characteristics in an organic solvent for a solid content of 15 wt% or more.

4. The polyimide of claim 1,
wherein the organic solvent comprises at least one selected from the group consisting of N,N'-dimethylformamide (DMF), N-methyl-pyrrolidone (NMP), N,N'-diethylformamide (DEF), N,N'-dimethylacetamide (DMAc), dimethylpropanamide (DMPA), N,N-diethylacetamide (DEAc), dimethyl sulfoxide (DMSO), 3-methoxy-N,N-dimethylpropanamide (KJCMPA), p-chlorophenol, o-chlorophenol, gamma-butyrolactone (GBL), diglyme, and naphthalene.

5. The polyimide of claim 1,
wherein a content of the bisphenol A dianhydride (BPADA) is 50 to 100 mol% based on the total dianhydride acid monomers.

6. The polyimide of claim 1,
wherein a content of the 2,2-bis(3-amino-4-hydroxyphenyl)hexafluoropropane (6-FAP) is 30 to 100 mol% based on the total diamine monomers.

7. The polyimide of claim 1,
wherein the dianhydride acid monomer further comprises at least one selected from the group consisting of 3,3',4,4'-benzophenonetetracarboxylic dianhydride (BTDA), pyromellitic dianhydride (PMDA), biphenyl tetracarboxylic dianhydride (BPDA), oxydiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, bis(3,4-dicarboxyphenyl)methane dianhydride, 2,2-bis(3,4-dicarboxyphenyl)propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic dianhydride, 1,4,5,8-naphthalenetetracarboxylic dianhydride, and 4,4'-(2,2-hexafluoroisopropylidene)diphthalic dianhydride.

8. The polyimide of claim 7,
wherein the dianhydride acid monomer further comprises 3,3',4,4'-benzophenonetetracarboxylic dianhydride (BTDA).

9. The polyimide of claim 1,
wherein the diamine monomer further comprises at least one selected from the group consisting of m-phenylenediamine (MPD), 4,4'-diaminodiphenylmethane (MDA), 4,4'-diaminodiphenyl ether (ODA), 2,2-bisaminophenoxyphenylpropane (BAPP), metaphenylenediamine, 3,3'-dimethylbenzidine, 2,2'-dimethylbenzidine, 2,4-diaminotoluene, 2,6-diaminotoluene, 3,5-diaminobenzoic acid (DABA), 3,3'-dimethyl-4,4'-diaminobiphenyl, 2,2'-dimethyl-4,4'-diaminobiphenyl (m-tolidine), 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, 4,4'-diaminobenzanilide, 3,3'-dimethoxybenzidine, 2,2'-dimethoxybenzidine, 3,3'-diaminodiphenyl ether, 3,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenyl)phenoxybenzophenone, 3,3'-diamino-4,4'-di(4-phenylphenoxy)benzophenone, 1,3-bis(3-aminophenyl sulfide)benzene, 1,3-bis(4-aminophenyl sulfide)benzene, 1,4-bis(4-aminophenyl sulfide)benzene, 1,3-bis(3-aminophenyl sulfone)benzene, 1,3-bis(4-aminophenyl sulfone)benzene, 1,4-bis(4-aminophenyl sulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl] ether, bis[3-(4-aminophenoxy)phenyl] ether, bis[4-(3-aminophenoxy)phenyl] ether, bis[4-(4-aminophenoxy)phenyl] ether, bis[3-(3-aminophenoxy)phenyl] ketone, bis[3-(4-aminophenoxy)phenyl] ketone, bis[4-(3-aminophenoxy)phenyl] ketone, bis[4-(4-aminophenoxy)phenyl] ketone, bis[3-(3-aminophenoxy)phenyl] sulfide, bis[3-(4-aminophenoxy)phenyl] sulfide, bis[4-(3-aminophenoxy)phenyl] sulfide, bis[4-(4-aminophenoxy)phenyl] sulfide, bis[3-(3-aminophenoxy)phenyl] sulfone, bis[3-(4-aminophenoxy)phenyl] sulfone, bis[4-(3-aminophenoxy)phenyl] sulfone, bis[4-(4-aminophenoxy)phenyl] sulfone, bis[3-(3-aminophenoxy)phenyl] methane, bis[3-(4-aminophenoxy)phenyl] methane, bis[4-(3-aminophenoxy)phenyl] methane, bis[4-(4-aminophenoxy)phenyl] methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane.

10. The polyimide of claim 9,
wherein the diamine monomer further comprises at least one selected from the group consisting of m-phenylenediamine (MPD) and 4,4'-diaminodiphenylmethane (MDA).

11. The polyimide of claim 1,
wherein the polyimide has a 5 wt% thermal decomposition temperature (Td) of 385°C or higher.

12. A polyimide solution comprising the polyimide according to any one of claims 1 to 11 and an organic solvent.

13. A polyimide film comprising the polyimide according to any one of claims 1 to 11.

14. A method for preparing a polyimide, comprising:
preparing a polyimide by polymerizing a dianhydride acid monomer comprising bisphenol A dianhydride (BPADA) and a diamine monomer comprising 2,2-bis(3-amino-4-hydroxyphenyl)hexafluoropropane (6-FAP).

15. The polyimide of claim 14,
wherein the step of preparing the polyimide comprises:
forming a polymerized unit consisting of the bisphenol A dianhydride (BPADA) and the 2,2-bis(3-amino-4-hydroxyphenyl)hexafluoropropane (6-FAP) by polymerizing bisphenol A dianhydride (BPADA) and 2,2-bis(3-amino-4-hydroxyphenyl)hexafluoropropane (6-FAP).
